# EUROPEAN PATENT SPECIFICATION

(11) **EP 3 570 498 B1**
(45) Date of publication and mention of the grant of the patent: **20.10.2021**
(21) Application number: 19174721.1
(22) Date of filing: 15.05.2019
(51) Int. Cl.: H04L 12/28

(54) **ADAPTIVE HVAC CONTROL SYSTEM**
ADAPTIVES HLK-STEUERSYSTEM
SYSTÈME DE CONTRÔLE CVC ADAPTATIF

(30) Priority: 16.05.2018 BE 201805321
(43) Date of publication of application: 20.11.2019
(73) Proprietor: Niko NV, 9100 Sint-Niklaas (BE)
(72) Inventor: VERCAMMEN, Johan, 2560 Nijlen (BE); DE BOCK, Yannick, 9120 Beveren (BE); DUFLOU, Joost, 3000 Leuven (BE); AUQUILLA, Andres, 3000 Leuven (BE)
(74) Representative: DenK iP bv

(56) References cited:
- EP-A1- 2 687 789
- US-A1- 2010 289 643
- US-A1- 2012 158 203
- US-A1- 2012 316 687

## Description

### Technical field of the invention

The present invention relates to HVAC control systems. More particularly, the present invention relates to adaptive HVAC control systems, which provide optimal thermal comfort for occupants in an area, e.g. a room or a space, of a building.

### Background of the invention

Nowadays, everything is getting smart, from smart phones to smart HVAC control systems, e.g. smart thermostats, to smart buildings and even to smart cities. This evolution is a direct result of the rise of the Internet of Things (loT), which, in combination with a growing environmental awareness, has led to the identification of the potential of ICT for improving energy efficiency of, for example, appliances or buildings.

Further, also efficient use of energy becomes more and more important in today's society. Introducing intelligence into devices, by modelling their usage, creating so-called intelligent or smart products, is one way of achieving energy savings. Examples hereof are smart thermostats, of which already quite some concepts exist.

Installing such smart devices comprising intelligence can be complicated and time consuming. US 2012/0158203 describes a system for managing energy usage of a user. The system includes a database storing a preferred energy profile associated with the user and a minimum energy profile, an automation control system that controls at least one device associated with the user, a presence detecting apparatus for detecting when the user is present, and a system control computer. The system control computer instructs the automation control system to operate the one device according to the preferred energy profile associated with the user in response to the presence detecting apparatus detecting the presence of the user. The system control computer further instructs the automation control system to operate the one device according to the minimum energy profile in response to the presence detecting apparatus detecting the absence of the user.

According to the system in US 2012/0158203 control of the devices is done via a central system control computer and an automation control system. Settings of the devices that are controlled by the system are not based on how a user uses the devices, and are thus not based on previous settings of a user, but on how the system control computer is programmed to optimize energy usage of the devices as much as possible.

US 2012/0316687 describes a method for managing power consumption. The method comprises receiving from a plurality of electricity relays an indication of a current state associated with each of the plurality of electricity relays. The method also includes receiving a power rate associated with a cost of power. The method further includes determining a threshold state based on the power rate and the current state associated with each of the plurality of electricity relays. The method additionally includes transmitting one or more control requests to one or more of the plurality of electricity relays. A first control request transmitted to a first electricity relay is based on the threshold state and a first current state associated with the first electricity relay.

Similar as to the system of US 2012/0158203, devices are controlled by a central system so as to optimize power consumption. Again, settings of the devices that are controlled by the system are not based on how a user uses the devices, and are thus not based on previous settings of a user, but on how the system control computer is programmed to optimize power consumption of the devices as much as possible.

### Summary of the invention

It is an object of the present invention to provide an adaptive HVAC contro system which provide optimal thermal comfort for occupants in an area, e.g. a room or a space, of a building.

The above objective is accomplished by a device according to embodiments of the present invention.

The invention is defined in the appended claims.

The present invention provides an HVAC control system for controlling the temperature in at least one area, e.g. a room or a space, of a building. The HVAC control system comprises at least one user input interface for receiving a setting from at least one occupant, at least one temperature control means, e.g. thermostat, for controlling the temperature in the at least one area, means for detection presence of at least one occupant, and a control and communication unit, e.g. gateway. The control and communication unit comprises a processor adapted for determining a user profile from the historical settings from the at least one occupant, and for storing this user profile, the user profile comprising at least one usage profile with corresponding user preferences, and transmission means adapted for sending the user preferences to the at least one temperature control means, e.g. thermostat, for adjusting the temperature corresponding to the user preferences in the at least one area. According to embodiments of the invention, the control and communication unit, e.g. gateway, is a remote control and communication unit, e.g. gateway, that is located away from the temperature control means, e.g. thermostat, and that is, wirelessly or by wires, connected to the at least one temperature control means.

An advantage of an HVAC control system according to embodiments of the invention, is that, because the intelligence of the system is provided in a remote control and communication unit, and not in the temperature control means itself, the temperature control means can be kept low cost. Because the control and communication unit is remote and is located on a central location, the system can easily be extended from implementation in one area in the building to a plurality of areas in the building or even to the complete building.

According to embodiments of the invention, the processor may be adapted to extract clusters of data from data streams received from the temperature control means. And according to still further embodiments of the invention, the processor may further be adapted for, from the clusters of data, predicting a preferred user profile from sequential historical settings of a same occupant.

The processor may further be adapted for regularly updating the preferred user profile from a further sequence of settings for the same occupant.

With preferred user profile is meant a setting directed to a particular occupant and considered as the preferred setting for that occupant. An advantage of such embodiments of the invention is that minimal or no interaction of an installer or a user is required in order to make the HVAC control system fully operational. The HVAC control system automatically updates the preferred user profile at regular intervals to, at any type, predict the most preferred user profiles for a particular occupant. This may also be referred to as self-learning or unsupervised learning.

Hence, according to such embodiments of the invention, an adaptive HVAC control system is provided which provides optimal thermal comfort for occupants in an area, e.g. a room or a space, of a building by learning from user behaviour and adapts control according to expected occupancy patterns.

According to further embodiments, the HVAC control system may furthermore comprise at least one means for occupant recognition, and the processor may further be adapted to distinguish between different occupants on the basis of the input from the at least one means for occupant

This is also referred to as multi-profiling and means that the processor is able to determine which occupant has entered the area of the building so as to send, by the transmission means, the relevant preferred user profile to the temperature control means, e.g. thermostat, so as to adapt the temperature setting in accordance with the preferences of the occupant that is, at that moment, present in the area.

According to such embodiments, the processor may be adapted to extract clusters of data from data streams received from the temperature control means and for, from the clusters of data, predicting a preferred user profile from a combination of the occupant recognition and sequential historical settings of the different occupants. The processor may still further be adapted for regularly updating the preferred user profile from a further sequence of settings for the different occupants.

According to further embodiments, the processor may further be adapted to, when multiple occupants are present at the same time in the at least one area of the building, determine an average value of the preferred user preferences for all occupants present in the at least one area.

An advantage hereof is that the temperature in the at least one area will be adjusted to an average temperature that offers the best comfort to all occupants in the at least one area and not only for one or two occupants.

However, according to embodiment of the invention, the average value of the preferred user preferences may be a weighted average value. According to such embodiments, the target setting may be a weighted average with possibly more weight for some occupants than for others, based on the historically observed corrections made by the occupants. In such case, some occupants may adjust to the others for example by adjusting their clothing.

The transmission means may further be adapted to transmit data to a cloud platform for additional reporting and calculation.

According to embodiments of the invention, the user input interface may be part of the temperature control means e.g. thermostat or may be formed by a wall display, a tablet or a smart phone.

The control and communication unit may be integrated in one of a display, a tablet, a TV, a settopbox or a smart phone.

The temperature control means may, according to embodiments of the invention comprise at least one of a thermostat, at least one thermostatic valve and/or at least one sensor.

In that way the HVAC control system will be able to adjust the temperature also in at least one area different from the area in which the temperature control means is located. This is also referred to as multi-zoning.

According to embodiments of the invention, the processor may still further be adapted to receive information from a remote device, e.g. a smart phone, on the upcoming arrival of at least one occupant to the at least one area of the building and to activate the transmission means to send the preferred user preferences corresponding to the occupant that will arrive to the temperature control means for adjusting the temperature to the preferred user preferences.

An advantage hereof is that, when that particular occupant arrives at the building, the relevant area or areas will already be at the preferred temperature as the heating and/or cooling can start at the right time, depending on the information that is given to the processor of the HVAC control system. For example, information will be given on who is arriving and at what time he or she will be at the building. In that way, adjusting the temperature will not start too early or too late, but just in time, in order to have the preferred setting at the time of arrival and yet not use unnecessary energy because of starting to adjust the temperature too early.

The means for occupant recognition may comprise at least one of a camera, a face recognition sensor, a voice recognition sensor, a badge reader, an access keypad, a mobile phone, BLE tags, and the like.

The means for detecting presence of the at least one occupant may comprise a CO₂ sensor, means for detecting opening or closing of a door, means for detecting presence of WiFi or Bluetooth, or the like.

### Brief description of the drawings

It has to be noted that same reference signs in the different figures refer to same, similar or analogous elements.
Fig. 1 schematically illustrate an HVAC control system according to embodiments of the invention.
Fig. 2 to Fig. 5 schematically illustrate possible implementations of an HVAC control system according to embodiments of the invention in an area or areas in a building.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides an HVAC control system for controlling the temperature in at least one area, e.g. a room or a space of a building. The HVAC control system comprises at least one user input interface for receiving a setting from at least one occupant, at least one temperature control means, e.g. thermostat, for controlling the temperature in the at least one area, means for detection presence of the at least one occupant, and a control and communication unit, e.g. gateway. The control and communication unit comprises a processor adapted for determining a user profile from the historical settings from the at least one occupant, and for storing this user profile, the user profile comprising a usage profile with corresponding user preferences, and transmission means adapted for sending the user preferences for a particular user profile to the at least one temperature control means, e.g. thermostat, for adjusting the temperature corresponding to the user preferences in the at least one area. According to the invention, the control and communication unit, e.g. gateway, is a remote control and communication unit, e.g. gateway, that is located away from the temperature control means, e.g. thermostat, and that is wirelessly or by wires connected to the at least one temperature control means.

With remote control and communication unit is meant that the control and communication unit is not part of the temperature control means but is a separate device or part of another device than the temperature control means.

An advantage of an HVAC control system according to embodiments of the invention, is that, because the intelligence of the system is provided in a remote control and communication unit, and not in the temperature control means itself, the temperature control means can be kept low cost. Because the control and communication unit is remote and is located on a central location, the system can easily be extended from implementation one area in the building to a plurality of areas in the building or even to the complete building.

Hence, according to embodiments of the invention, the intelligence necessary for the control of the devices part of the HVAC control system for controlling the temperature in at least one area of a building, is not part of the temperature control means but is located on a, preferably central, location away from the temperature control means.

The present invention will hereinafter be described by means of different embodiments. It has to be understood that these embodiments are only for the ease of understanding the invention and are not intended to limit the invention in any way.

Whenever in the description and claims is referred to user profile, a combination of user preferences and usage profile for a given occupant (or group of occupants treated as one) is meant. The usage profile comprises the expected use periods of the HVAC control system by particular occupants, comprising a plurality of possible profiles and probabilities of occurrence. For example, this can comprise time periods in which a particular occupant is present in the building A user profile is linked to a particular occupant. One user profile can comprise more than one usage profile, such as for example but not limited to, a week profile and a weekend profile. Each usage profile has its own user preferences. With user preferences is meant the preference of user settings for a particular occupant and for a particular usage, e.g. comfort temperature when actively using a space, comfort temperature during sleeping times, temperature when nobody is in the space, ....

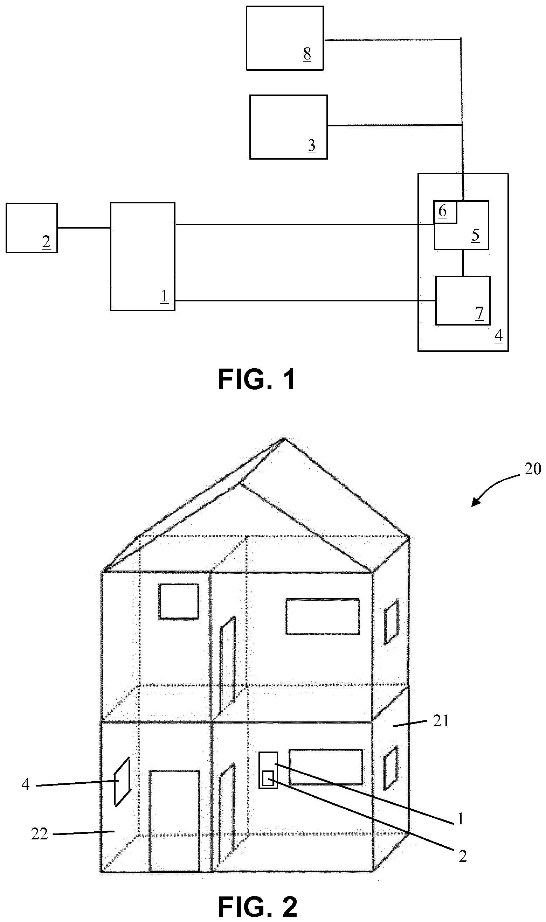

Fig. 1 schematically illustrates an HVAC control system 10 according to embodiments of the invention. The HVAC control system 10 comprises at least one temperature control means 1. The temperature control means 1 may, for example, be at least one thermostat, at least one thermostatic valve, at least on sensor, any other suitable means for controlling the temperature as known by a person skilled in the art, or a combination thereof.

The HVAC control system 10 also comprises a user input interface 2 through which an occupant of the at least one area can input a setting, i.e. a preferred temperature. The input interface 2 may, according to embodiments of the invention, for example be part of the temperature control means 1, e.g. thermostat, or may be formed by a wall display, a tablet or a smart phone.

Further, the HVAC control system 10 comprises means 3 for detecting the presence of at least one occupant in the room, so that the system 10 knows there is someone present and that action should be taken. The means 3 for detecting the presence of at least one occupant may, for example, comprise a CO₂ sensor, means for detecting the opening or closing of a door, means for detecting presence of WiFi or Bluetooth, or any other suitable means for detecting the presence of a person in an area, e.g. room or space, of a building.

The HVAC control system 10 furthermore comprises a control and communication means 4. According to embodiments of the invention, the control and communication means 4 may, for example be a gateway or may be integrated in one of a display, a tablet, a TV, a settopbox or a smart phone. According to embodiments of the invention, the control and communication means 4 may be a remote control and communication means 4, i.e. the control and communication means 4 is located away from the temperature control means 1. Or in other words, the temperature control means 1 and the control and communication means 4 are implemented as two different devices. The control and communication means 4 may preferably be located at a fixed central location in the building. This may, for example in case of a gateway, be in a cabinet. And according to another example, in case of the control and communication means 4 being e.g. a display, it can be provided on a wall in a room of the building. However, the location of the control and communication means 4 is not necessarily fixed. Indeed, in case of the control and communication means 4 being a smartphone, it can be located anywhere in the house or it can be carried by an occupant of the room, e.g. in its pockets.

The control and communication means 4 comprises a processor 5 adapted for determining a user profile. With user profile is meant a particular setting for a particular person. In other words, a setting that is preferred by a particular person. The user profile comprises or is a combination of at least one usage profile with corresponding user preferences. The user preferences for each of the usage profiles may be different or may be the same. An example of a user profile may, for example be a user profile comprising two usage profiles, e.g. a week profile and a weekend profile. Each of the week profile and the weekend profile then comprise user preferences. Normally, the user preferences for the week profile may be different from the user preferences for the weekend profile, but that does not necessarily has to be so.

The user profile can be determined from the historical input setting of the at least one occupant. After this user profile has been determined, it can be stored in the processor memory 6.

The control and communication means 4 furthermore comprises transmission means 7 adapted for sending the user preferences to the at least one temperature control means 1 for adjusting the temperature in accordance with the user preferences in the at least one area. The control and communication unit 4 is wirelessly or by wires connected to the at least one temperature control means 1.

Because the control and communication unit 4 is remote from the at least one temperature control means 1, the HVAC control system 10 according to embodiments of the invention is a very cost effective system. The temperature control means 1 can be a low cost means while the, in a lot of cases, more expensive control and communication unit 4 comprises all intelligence. This allows to easily extend the system to more than one area within the building.

The HVAC control system 10 according to embodiments of the invention can be implemented in different ways.

For example, according to embodiments of the invention, the HVAC control system 10 can be a simple system comprising only one thermostat 1 with user input interface 2 as temperature control means and one gateway 4 as control and communication unit. This is particularly useful when the thermostat system 10 has to serve only one area, e.g. one room or a small space, in a building. This is illustrated in Fig. 2. The thermostat 1 may for example, be located in a living room 21 while the gateway 4 may, for example, be in the hallway 22, as illustrated in Fig. 2, or in the garage.

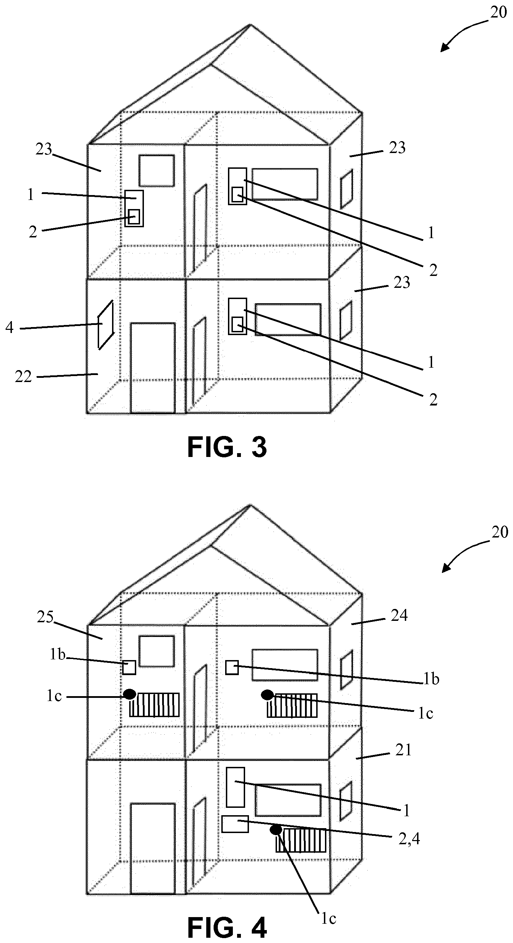

According to other embodiments, for example in case of buildings 20 comprising student rooms or apartments 23, the HVAC control system 10 may comprise a plurality of thermostats 1 with user input interface 2 as temperature control means, preferably one thermostat 1 for each of the rooms or apartments 23 as illustrated in Fig. 3. On a central place, e.g. in the hallway 22 or in the garage (not shown), a gateway 4 that is wirelessly or by wires connected to each of the thermostats 1 may be provided as control and communication unit.

According to still further embodiments and as illustrated in Fig. 4 the HVAC control system 10 may comprise one thermostat 1 with user input interface 2 as temperature control means in a particular room, e.g. in the living room 21, of a building 20 in combination with least one temperature sensor 1b and at least one thermostatic valve 1c in other rooms 24, 25. Optionally there may be an additional thermostatic valve 1c in the living room as well. A display 2,4 may be used as a separated user input interface 2, which may at the same time comprise the control and communication unit.

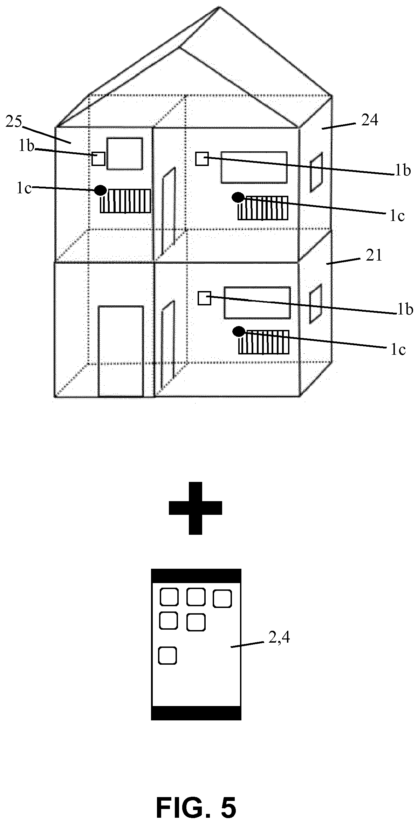

According to still further embodiments of the invention, the temperature control means 1 may be implemented as a combination of temperature sensors 1b and thermostatic valves 1c. In the example given, a smartphone 2, 4 may used as user input interface and as control and communication unit. This is illustrated in Fig. 5.

It has to be noted that the above examples are not intended to limit the invention in any way, any suitable combination of temperature control means 1, user input interface 2 and control and communication unit 4 may be possible according to embodiments of the invention. According to embodiments of the invention, the HVAC control system 10 may also comprise at least one means 8 for occupant recognition. The means 8 for occupant recognition may, for example, be at least one of a camera, a face recognition sensor, a voice recognition sensor, a badge reader, an access keypad, a mobile phone, BLE tags or any other suitable means for occupant recognition. In that way, the user profile determined by the processor 5 can be linked to a particular occupant.

According to embodiments of the invention, the processor 5 may further be adapted for predicting a preferred user profile either, according to embodiments of the invention only from sequential or historical settings of a same occupant, or, according to embodiments where the HVAC control system 10 comprises a means 8 for occupant recognition, from a combination of the occupant recognition and sequential or historical settings of a same occupant. In both cases, the processor 5 needs to find groups in usage data streams received from the thermostat 1. This entails identifying patterns in the incoming data. In other words, usage patterns need to be extracted from a set of historical information. Hence, the processor 5 may be adapted to extract clusters of data from data streams received from the thermostat 1. From these clusters of data, preferred occupant setting can be derived However, over time, usage behaviour evolves and preferences of occupants can change. In order to adapt to these changes, extracted clusters have to be updated. According to embodiments of the invention, the initially identified clusters can be updated dynamically. Each time a new day of information becomes available, the following actions will be performed.

First, the current cluster compositions are analysed to check whether two or more clusters are very similar and should merge to one bigger cluster. The similarity may, for example, be computed by the R-squared metric which measures the homogeneity between clusters. Additionally, the uncertainty of each cluster is investigated. Extended periods of high uncertainty, i.e. similar probabilities for two or more states, e.g. being present, being absent, sleep ..., result in the cluster being split into two or more parts.

Thirdly, the new day is matched with the existing clusters, and assigned to the most likely cluster, if they are sufficiently similar), which updates the cluster prototype.

After assigning the new day to its corresponding cluster, the weights of the days in each cluster are updated. Starting with a weight of 1, the contribution of data is gradually decreased over time by applying a decay function, assuming more recent data conveys more relevant information.

If the new day did not match with any of the existing clusters, it is stored in a potential new cluster. When enough days are added to this potential cluster, it will be activated.

Finally, when the number of clusters becomes too big, obsolete clusters, i.e. clusters that have not been updated for a long time and thus have low weights, are removed.

Further usage is typically highly correlated with previous usage and weekday information. Hence, this information can be used to predict future usage requirements. As occupants typically exhibit weekly recurring behaviour, there might be some patterns in the sequence of the historical cluster. This helps in predicting the preferred occupant setting of an occupant. An advantage of this embodiment is that is requires only few parameters, which avoids the troubles of parameter tuning.

An advantage of such embodiments of the invention is that minimal or no interaction of an installer of a user is required in order to make the HVAC control system 10 fully operational. The HVAC control system 10 automatically updates the preferred user profiles at regular intervals to, at any type, predict the most preferred user profile for a particular occupant. According to the above embodiments, traditional calendar schemes do not have to be set in the temperature control means by the installer anymore. However, it is still a possibility to first set such calendar schemes. In such cases, the HVAC control system 10 according to embodiments of the invention is able to automatically update these calendar schemes corresponding to historical settings of an occupant and according to what was described above.

According to embodiments of the invention, the processor 5 may further be adapted to distinguish between different occupants. This can be done because of the presence of the at least one means 8 of occupant recognition. In combination with the data sequences or clusters extracted from the incoming data from the at least one thermostat 1, the processor 5 can distinguish between different occupants and can correlate the preferred user profile to the correct occupant.

The above is also referred to as multi-profiling and means that the processor 5 is able to determine which occupant has entered the area of the building so as to send, by the transmission means 7, the relevant preferred user preferences to the temperature control means 1 so as to adapt the temperature in accordance with the occupant that is, at that moment, present in the area.

When multiple occupants are present in a same area, i.e. a same room 21 to 25 or same space, in a building 20, the HVAC control system 10 according to embodiments of the invention is adapted so as to be able to provide for the best comfort for all of the occupants and to come as close to the preferred occupant settings of each of the occupants. Therefore, the processor may be further adapted to determine an average value of the preferred user preferences for all occupants present in the at least one area.

An advantage hereof is that the temperature in the at least one area will be adjusted to an average temperature that offers the best comfort to all occupants in the at least one area and not only for one or two occupants.

According to particular embodiments of the invention, the processor 5 may be adapted to determine a weighted average value of the preferred user preferences. According to such embodiments, the target setting could be a weighted average with possibly more weight for some occupants than for others, based on the historically observed corrections made by the occupants. In such case, some occupants may adjust to the others for example by adjusting their clothing.

According to further embodiments, the processor 5 may further be adapted to receive information from a remote device such as, for example a smart phone, on the upcoming arrival of at least one occupant to the at least one area, and to activate the transmission means 7 to send the preferred user preferences corresponding to the occupant that will arrive to the temperature control means for adjusting the temperature to the preferred user preferences.

According to such embodiments, absence information of the current day is compared to found clusters of data to predict which pattern is applicable on that current day. The corresponding occupant setting is than selected and heating or cooling is controlled accordingly.

An advantage hereof is that, when that particular occupant arrives at the building, the relevant area or areas will already be at the preferred temperature as the heating and/or cooling can start at the right time, depending on the information that is given to the processor 5 of the HVAC control system 10. For example, information will be given on who is arriving and at what time he or she will be at the building. In that way, adjusting the temperature will not start too early or too late, but just in time, in order to have the preferred setting at the time of arrival and yet not use unnecessary energy because of starting to adjust the temperature too early.

## Claims

1. An HVAC control system (10) for controlling the temperature in at least one area (21 to 25) of a building (20), the HVAC control system (10) comprising:
- at least one user input interface (2) for receiving a setting from at least one occupant,
- at least one temperature control means (1) for controlling the temperature in the at least one area,
- means (3) for detection presence of the at least one occupant, and
- a control and communication unit (4) comprising:
- a processor (5), and
- transmission means (7) adapted for sending the user preferences to the at least one temperature control means (1) for adjusting the temperature corresponding to the user preferences in the at least one area,
wherein the control and communication unit (4) is a remote control and communication unit that is located away from the temperature control means (1) and that is connected to the at least one temperature control means (1),
**characterized in that in that** the processor (5) is adapted
- for determining a user profile, i.e. a combination of user preferences and a usage profile, from the historical settings from the at least one occupant, and for storing this user profile, the user profile comprising at least one usage profile with corresponding user preferences, and
- to predict a preferred user profile from sequential historical settings of a same occupant by extracting clusters of data streams received from the temperature control means (1).

2. HVAC control system (10) according to claim 1, wherein the processor (5) is further adapted for regularly updating the preferred user profile from a further sequence of settings for the same occupant.

3. HVAC control system (10) according to claim 2, wherein the processor (5) is adapted to dynamically update the preferred user profile by, each time a new day of information becomes available:
- analysing current data cluster compositions, and
- matching the new day with existing clusters.

4. HVAC control system (10) according to claim 3, wherein the processor (5) is further adapted to, when the new day did not match with any of the existing data clusters, store the new day in a potential new cluster.

5. HVAC control system (10) according to any of the previous claims, wherein the HVAC control system (10) furthermore comprises at least one means (8) for occupant recognition, and wherein the processor (5) is further adapted to distinguish between different occupants on the basis of the input from the at least one means for occupant recognition (8).

6. HVAC control system (10) according to any of the previous claims, wherein the processor (5) is further adapted to, when multiple occupants are present at the same time in the at least one area of the building, determine an average value of the preferred user preferences for all occupants present in the at least one area.

7. HVAC control system (10) according to claim 6, wherein the average value of the preferred user preferences is a weighted average value.

8. HVAC control system (10) according to any of the previous claims, wherein the transmission means (7) is further adapted to transmit data to a cloud platform for additional reporting and calculation.

9. HVAC control system (10) according to any of the previous claims, wherein the user input interface (2) is part of the temperature control means (1) or is formed by a wall display, a tablet or a smart phone.

10. HVAC control system (10) according to any of the previous claims, wherein the control and communication unit (4) is a gateway or is integrated in one of a display, a tablet, a TV, a settopbox or a smart phone.

11. HVAC control system (10) according to any of the previous claims, wherein the temperature control means (1) comprises at least one of a thermostat, at least one thermostatic valve or at least on sensor.

12. HVAC control system (10) according to any of the previous claims, wherein the processor (5) is further adapted to receive information from a remote device on the upcoming arrival of at least one occupant to the at least one area of the building and to activate the transmission means (7) to send the user preferences corresponding to the occupant that will arrive to the temperature control means (1) for adjusting the temperature to the user preferences.

13. HVAC control system (10) according to any of claims 5 to 12, wherein the means (8) for occupant recognition comprises at least one of a camera, a face recognition sensor, a voice recognition sensor, a badge reader, an access keypad, a mobile phone, BLE tags.

14. HVAC control system (10) according to any of the previous claims, wherein the means (3) for detecting presence of the at least one occupant comprises a CO₂ sensor, means for detecting opening or closing of a door, means for detecting presence of WiFi or Bluetooth.

## Patentansprüche

1. HLK-Steuersystem (10) zum Steuern der Temperatur in wenigstens einem Bereich (21 bis 25) eines Gebäudes (20), wobei das HLK-Steuersystem (10) Folgendes umfasst:
- wenigstens eine Benutzereingabeschnittstelle (2) zum Empfangen einer Einstellung von wenigstens einem Bewohner,
- wenigstens ein Temperatursteuermittel (1) zum Steuern der Temperatur in dem wenigstens einen Bereich,
- ein Mittel (3) für eine Erfassung einer Gegenwart des wenigstens einen Bewohners und
- eine Steuer- und Kommunikationseinheit (4), die Folgendes umfasst:
- einen Prozessor (5) und
- ein Übertragungsmittel (7), das zum Senden der Benutzerpräferenzen an das wenigstens eine Temperatursteuermittel (1) zum Anpassen der Temperatur entsprechend den Benutzerpräferenzen in dem wenigstens einen Bereich geeignet ist,
wobei die Steuer- und Kommunikationseinheit (4) eine entfernte Steuer- und Kommunikationseinheit ist, die sich abseits des Temperatursteuermittels (1) befindet und die mit dem wenigstens einen Temperatursteuermittel (1) verbunden ist,
**dadurch gekennzeichnet, dass** der Prozessor (5) zu Folgendem geeignet ist:
- zum Bestimmen eines Benutzerprofils, d. h. einer Kombination von Benutzerpräferenzen und einem Nutzungsprofil, aus den historischen Einstellungen des wenigstens einen Bewohners und zum Speichern dieses Benutzerprofils, wobei das Benutzerprofil wenigstens ein Nutzungsprofil mit entsprechenden Benutzerpräferenzen umfasst, und
- um ein bevorzugtes Benutzerprofil aus sequentiellen historischen Einstellungen eines gleichen Bewohners durch Extrahieren von Clustern von Datenströmen vorherzusagen, die von dem Temperatursteuermittel (1) empfangen werden.

2. HLK-Steuersystem (10) nach Anspruch 1, wobei der Prozessor (5) ferner zum regelmäßigen Aktualisieren des bevorzugten Benutzerprofils aus einer weiteren Sequenz von Einstellungen für den gleichen Bewohner geeignet ist.

3. HLK-Steuersystem (10) nach Anspruch 2, wobei der Prozessor (5) geeignet ist, um das bevorzugte Benutzerprofil jedes Mal, wenn ein neuer Tag von Informationen verfügbar wird, durch Folgendes dynamisch zu aktualisieren:
- Analysieren aktueller Datenclusterzusammensetzungen, und
- Prüfen einer Übereinstimmung des neuen Tages mit vorhandenen Clustern.

4. HLK-Steuersystem (10) nach Anspruch 3, wobei der Prozessor (5) ferner geeignet ist, um den neuen Tag in einem potentiellen neuen Cluster zu speichern, wenn der neue Tag mit keinem der vorhandenen Datencluster übereinstimmt.

5. HLK-Steuersystem (10) nach einem der vorhergehenden Ansprüche, wobei das HLK-Steuersystem (10) zudem wenigstens ein Mittel (8) für eine Bewohnererkennung umfasst und wobei der Prozessor (5) ferner geeignet ist, um zwischen verschiedenen Bewohnern basierend auf der Eingabe aus dem wenigstens einen Mittel für die Bewohnererkennung (8) zu unterscheiden.

6. HLK-Steuersystem (10) nach einem der vorhergehenden Ansprüche, wobei der Prozessor (5) ferner geeignet ist, um, wenn mehrere Bewohner gleichzeitig in dem wenigstens einen Bereich des Gebäudes gegenwärtig sind, einen Durchschnittswert der bevorzugten Benutzerpräferenzen für alle Bewohner zu bestimmen, die in dem wenigstens einen Bereich gegenwärtig sind.

7. HLK-Steuersystem (10) nach Anspruch 6, wobei der Durchschnittswert der bevorzugten Benutzerpräferenzen ein gewichteter Durchschnittswert ist.

8. HLK-Steuersystem (10) nach einem der vorhergehenden Ansprüche, wobei das Übertragungsmittel (7) ferner geeignet ist, um Daten für eine zusätzliche Berichterstellung und Berechnung an eine Cloud-Plattform zu übertragen.

9. HLK-Steuersystem (10) nach einem der vorhergehenden Ansprüche, wobei die Benutzereingabeschnittstelle (2) Teil des Temperatursteuermittels (1) ist oder durch ein Wanddisplay, ein Tablet oder ein Smartphone ausgebildet ist.

10. HLK-Steuersystem (10) nach einem der vorhergehenden Ansprüche, wobei die Steuer- und Kommunikationseinheit (4) ein Gateway ist oder in ein Display, ein Tablet, ein Fernsehgerät, eine Set-Top-Box oder ein Smartphone integriert ist.

11. HLK-Steuersystem (10) nach einem der vorhergehenden Ansprüche, wobei das Temperatursteuermittel (1) ein Thermostat, wenigstens ein thermostatisches Ventil und/oder wenigstens einen Sensor umfasst.

12. HLK-Steuersystem (10) nach einem der vorhergehenden Ansprüche, wobei der Prozessor (5) ferner geeignet ist, um Informationen über die bevorstehende Ankunft wenigstens eines Bewohners in dem wenigstens einen Bereich des Gebäudes von einer entfernten Vorrichtung zu empfangen und das Übertragungsmittel (7) zu aktivieren, um die Benutzerpräferenzen, die dem Bewohner entsprechen, der ankommen wird, an das Temperatursteuermittel (1) zum Anpassen der Temperatur an die Benutzerpräferenzen zu senden.

13. HLK-Steuersystem (10) nach einem der Ansprüche 5 bis 12, wobei das Mittel (8) für die Bewohnererkennung eine Kamera, einen Gesichtserkennungssensor, einen Spracherkennungssensor, einen Ausweisleser, ein Zugangstastenfeld, ein Mobiltelefon und/oder BLE-Tags umfasst.

14. HLK-Steuersystem (10) nach einem der vorhergehenden Ansprüche, wobei das Mittel (3) zum Erfassen der Gegenwart des wenigstens einen Bewohners einen CO₂-Sensor, Mittel zum Erfassen eines Öffnens oder eines Schließens einer Tür, Mittel zum Erfassen der Gegenwart von WLAN oder Bluetooth umfasst.

## Revendications

1. Système de commande de CVC (10) permettant de réguler la température dans au moins une zone (21 à 25) d'un bâtiment (20), le système de commande de CVC (10) comprenant :
- au moins une interface d'entrée utilisateur (2) pour recevoir un réglage d'au moins un occupant,
- au moins un moyen de régulation de température (1) pour réguler la température dans l'au moins une zone,
- un moyen (3) de détection de présence de l'au moins un occupant, et
- une unité de régulation et de communication (4) comprenant :
- un processeur (5), et
- un moyen de transmission (7) adapté pour envoyer les préférences utilisateur à l'au moins un moyen de régulation de température (1) pour régler la température correspondant aux préférences de l'utilisateur dans l'au moins une zone,
dans lequel l'unité de régulation et de communication (4) est une unité de régulation et de communication à distance qui est située à l'écart du moyen de régulation de température (1) et qui est connectée à l'au moins un moyen de régulation de température (1),
**caractérisé en ce que** le processeur (5) est adapté
- pour déterminer un profil utilisateur, c'est-à-dire une combinaison de préférences utilisateur et d'un profil d'utilisation, à partir des paramètres historiques de l'au moins un occupant, et pour stocker ce profil utilisateur, le profil utilisateur comprenant au moins un profil d'utilisation avec les préférences utilisateur correspondantes, et
- pour prédire un profil utilisateur préféré à partir de paramètres historiques séquentiels d'un même occupant en extrayant des groupes de flux de données reçus du moyen de régulation de température (1).

2. Système de commande de CVC (10) selon la revendication 1, dans lequel le processeur (5) est en outre adapté pour mettre à jour régulièrement le profil utilisateur préféré à partir d'une autre séquence de paramètres pour le même occupant.

3. Système de commande de CVC (10) selon la revendication 2, dans lequel le processeur (5) est adapté pour, à chaque fois qu'un nouveau jour d'informations devient disponible, mettre à jour de manière dynamique le profil utilisateur préféré en :
- analysant les compositions des groupes de données actuels, et
- associant le nouveau jour avec les groupes existants.

4. Système de commande de CVC (10) selon la revendication 3, dans lequel le processeur (5) est en outre adapté pour, lorsque le nouveau jour ne correspond à aucun des groupes de données existants, stocker le nouveau jour dans un nouveau groupe potentiel.

5. Système de commande de CVC (10) selon l'une quelconque des revendications précédentes, dans lequel le système de commande de CVC (10) comprend par ailleurs au moins un moyen (8) pour la reconnaissance d'occupant, et dans lequel le processeur (5) est en outre adapté pour établir une distinction entre différents occupants sur la base de l'entrée de l'au moins un moyen de reconnaissance d'occupant (8).

6. Système de commande de CVC (10) selon l'une quelconque des revendications précédentes, dans lequel le processeur (5) est en outre adapté pour, lorsque plusieurs occupants sont présents en même temps dans l'au moins une zone du bâtiment, déterminer une valeur moyenne des préférences utilisateur préférées pour tous les occupants présents dans l'au moins une zone.

7. Système de commande de CVC (10) selon la revendication 6, dans lequel la valeur moyenne des préférences utilisateur préférées est une valeur moyenne pondérée.

8. Système de commande de CVC (10) selon l'une quelconque des revendications précédentes, dans lequel le moyen de transmission (7) est en outre adapté pour transmettre des données à une plateforme cloud pour un rapport et un calcul supplémentaires.

9. Système de commande de CVC (10) selon l'une quelconque des revendications précédentes, dans lequel l'interface d'entrée utilisateur (2) fait partie du moyen de régulation de température (1) ou est formée par un affichage mural, une tablette ou un téléphone multifonction.

10. Système de commande de CVC (10) selon l'une quelconque des revendications précédentes, dans lequel l'unité de régulation et de communication (4) est une passerelle ou est intégrée dans un affichage, une tablette, un téléviseur, un décodeur, ou un téléphone multifonction.

11. Système de commande de CVC (10) selon l'une quelconque des revendications précédentes, dans lequel le moyen de régulation de température (1) comprend un thermostat et/ou une vanne thermostatique et/ou un capteur.

12. Système de commande de CVC (10) selon l'une quelconque des revendications précédentes, dans lequel le processeur (5) est en outre adapté pour recevoir des informations d'un dispositif à distance sur l'arrivée prochaine d'au moins un occupant dans l'au moins une zone du bâtiment et pour activer le moyen de transmission (7) afin d'envoyer les préférences utilisateur correspondant à l'occupant qui arrivera au moyen de régulation de température (1) afin de régler la température selon les préférences utilisateur.

13. Système de commande de CVC (10) selon l'une quelconque des revendications 5 à 12, dans lequel le moyen (8) pour la reconnaissance d'occupant comprend une caméra et/ou un capteur de reconnaissance faciale et/ou un capteur de reconnaissance vocale et/ou un lecteur de badge et/ou un clavier d'accès et/ou un téléphone portable et/ou des étiquettes BLE.

14. Système de commande de CVC (10) selon l'une quelconque des revendications précédentes, dans lequel le moyen (3) pour détecter la présence de l'au moins un occupant comprend un capteur de CO₂, des moyens pour détecter l'ouverture ou la fermeture d'une porte, des moyens pour détecter présence de WiFi ou de Bluetooth.
